(19) Europäisches Patentamt
European Patent Office
Office européen des brevets

(11) **EP 2 514 309 B1**

(12) **EUROPÄISCHE PATENTSCHRIFT**

(45) Veröffentlichungstag und Bekanntmachung des Hinweises auf die Patenterteilung:
**29.07.2015 Patentblatt 2015/31**

(51) Int Cl.:
*A01N 35/02* (2006.01)    *A01N 43/64* (2006.01)
*A01N 43/90* (2006.01)    *C10M 173/00* (2006.01)
*A01P 1/00* (2006.01)

(21) Anmeldenummer: **11003358.6**

(22) Anmeldetag: **21.04.2011**

(54) **Biozidzusammensetzung als Zusatz für Metallbearbeitungsflüssigkeiten**

Biocidal compound as additive for metal processing fluids

Composition de biocide comme additif pour liquides de préparation de métal

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.10.2012 Patentblatt 2012/43**

(73) Patentinhaber: THOR GmbH
**67346 Speyer (DE)**

(72) Erfinder:
• **Schmidt, Hans-Jürgen**
  **67346 Speyer (DE)**
• **Grabbe, Roman, Dr.**
  **67435 Neustadt/Weinstrasse (DE)**
• **Baum, Rüdiger**
  **68753 Waghäusel (DE)**

(56) Entgegenhaltungen:
EP-A1- 0 060 471    EP-A1- 1 402 778
EP-A2- 1 579 763    DE-B- 1 183 632

**Beschreibung**

Die Erfindung betrifft synergistische Biozidzusammensetzungen von Hexahydro-1,3,5-tris(2-hydroxyethyl)-s-triazin (HHT) und Tetramethylolacetylendiharnstoff (TMAD). Die Erfindung betrifft ferner die Verwendung dieser Biozidzusammensetzungen in wässrigen Flüssigkeiten, wie Metallbearbeitungsflüssigkeiten.

Metallbearbeitungsflüssigkeiten, wie Kühlschmiermittel, Kühlschmierstoffe oder Bohr- und Schneidöle dienen in der Fertigungstechnik beim Bohren, Fräsen, Trennen oder Umformen auf Werkzeugmaschinen der Wärmeabfuhr und Verminderung der Reibung zwischen Werkzeug und meist metallischem Werkstück durch Schmierung. Darüber hinaus dienen sie bei Zerspanungsprozessen zur Entfernung der Späne durch Abspülen aus dem Arbeitsumfeld. Ein weiterer wichtiger Nebeneffekt der Metallbearbeitungsflüssigkeiten ist der Korrosionsschutz des Werkstücks.

In der Praxis wird zwischen wassermischbaren bzw. wassergemischten und nicht wassermischbaren Metallbearbeitungsflüssigkeiten unterschieden. Nicht-wassermischbare Metallbearbeitungsflüssigkeiten sind im Allgemeinen unlegierte oder legierte Öle. Nicht wassermischbare Metallbearbeitungsflüssigkeiten kommen zumeist zum Einsatz, wenn eine hohe Schmierwirkung erforderlich ist. Ihr Nachteil besteht in den höheren Anschaffungs- und Entsorgungskosten. Des Weiteren können sie keine Kühlwirkung durch einen verdampfenden Wasseranteil bereitstellen.

Wassergemischte Metallbearbeitungsflüssigkeiten enthalten einen hohen Anteil an Wasser, im Allgemeinen etwa 95%. Sie werden vor Ort aus wassermischbaren Konzentraten hergestellt, oder bereits als anwendungsfertige Emulsionen bezogen. Der nicht wässrige Anteil besteht zumeist aus Ölen, ggf. mineralischen Ursprungs und evtl. Emulgatoren und/oder Additiven. Wassergemischte Metallbearbeitungsflüssigkeiten bieten eine gute Wärmeabfuhr, entfalten jedoch eine geringere Schmierwirkung als nicht wassergemischte Metallbearbeitungsflüssigkeiten. Durch den hohen Wasseranteil sind wassergemischte Metallbearbeitungsflüssigkeiten sowohl hinsichtlich Beschaffung als auch Entsorgung preisgünstiger als nicht wassergemischte Kühlschmierstoffe.

Die neben Wasser enthaltenen organischen Substanzen in wassergemischten Metallbearbeitungsflüssigkeiten sind allgemein gut biologisch abbaubar. Aufgrund dessen stellt eine wassergemischte Metallbearbeitungsflüssigkeit ein nahezu ideales Substrat für Mikroorganismen dar.

Diese Mikroorganismen können sowohl die Entstehung von mikrobiellen Ablagerungen auf Maschinenoberflächen, das Verstopfen von Düsen und Rohren, als auch die Verschlechterung der Eigenschaften der Metallbearbeitungsflüssigkeiten, eine verstärkte Korrosion, Gesundheits- und Geruchsprobleme verursachen. Die durch das Wachstum von Mikroorganismen verursachte Zersetzung der Metallbearbeitungsflüssigkeiten führt zum Verlust der anwendungswesentlichen Eigenschaften der Flüssigkeiten. Bedingt durch mikrobielle Stoffwechselprodukte kann der pH-Wert der Flüssigkeiten sinken und Veränderungen der Flüssigkeiten bewirken, bis die Flüssigkeiten keine geeigneten Gleiteigenschaften bzw. Korrosionsschutzeigenschaften mehr besitzen. An diesem Punkt muss die Metallbearbeitungsflüssigkeit durch eine frische ersetzt werden, was zu einem Verlust an Produktionszeit führt.

Die mit dem Wachstum von Mikroorganismen verbundenen Probleme führten zu einer intensiven Verwendung von Bioziden in Metallbearbeitungsflüssigkeiten. Biozide können als flüssige Konzentrate eingebracht, oder direkt zu verdünnten Flüssigkeiten zugegeben werden, sobald diese in den Tankbehältern der betreffenden Bearbeitungsmaschine sind. Unter den kommerziell erhältlichen Bioziden weisen viele Geruchsprobleme auf, oder sind problematisch bei der Lagerung, Verwendung oder Handhabung. Daher sind kommerziell erhältliche Biozide oft nur beschränkt verwendbar. Folglich sind die Fachleute auf dem Gebiet der Metallbearbeitungsflüssigkeiten noch immer auf der Suche nach verbesserten Bioziden bzw. Biozidzusammensetzungen für diesen Einsatzzweck.

Die Wirkung des Biozids Formaldehyd gegenüber Mikroorganismen, wie Bakterien, ist allgemein bekannt, siehe bspsw. S.S. Block, Hrsg., Disinfection, Sterilization and Preservation, 5. Auflage, 2001, Lippincott, Williams & Wilkins. Ferner wird der Einsatz von Formaldehyd in Metallbearbeitungsflüssigkeiten in einer Vielzahl von Druckschriften offenbart.

Hexahydro-1,3,5-tris(2-hydroxyethyl)-s-triazin wird seit langem als Biozid in Metallbearbeitungsflüssigkeiten verwendet, um sowohl das Bakterien- als auch das Pilzwachstum zu kontrollieren. Hexahydro-1,3,5-tris(2-hydroxyethyl)-5-triazin kann ausgehend von Formaldehyd und Ethanolamin auf einfache Weise hergestellt werden und Wasser von vielen Firmen vertrieben, beispielsweise unter dem Handelsnamen EMULCID von der Firma THOR.

Die Wirkung des Hexahydro-1,3,5-tris(2-hydroxyethyl)-s-triazins (HHT), wenn es als Biozid verwendet wird, beruht zum Teil auf der Wirkung des von diesem freigesetzten Formaldehyds. Aufgrund der karzinogenen Eigenschaften von Formaldehyd ist es jedoch wünschenswert, Verbindungen zu verwenden, die freien Formaldehyd in möglichst geringen Mengen bereitstellen. Jedoch ist Triazin nur wirksam gegen Pilze, wenn es in Konzentrationen verwendet wird, die ausreichende Mengen an verfügbarem Formaldehyd zur Verfügung stellen.

EP 1 402 778 A1 offenbart ein Konservierungsmittel mit verminderter Emission, das ein N-Formal und ein emissionsverminderndes Additiv enthält.

EP 1 579 763 A2 offenbart ein Konservierungsmittel mit verminderter Formaldehyd- und Amin-Emission, das ein N-Formal, ein emissionsverminderndes Additiv und Monoethylenglykol enthält.

Im Lichte des vorstehend diskutierten Standes der Technik ist es eine Aufgabe der Erfindung, eine Biozidzusammensetzung bereitzustellen, deren mikrobizide Wirkkomponenten synergistisch zusammen wirken, und die das Wachstum von mindestens einem Mikroorganismus, insbesondere von Pilzen und Bakterien in Systemen, wie Metallbearbeitungsflüssigkeiten, kontrollieren kann. Es ist eine weitere Aufgabe, solche Zusammensetzungen bereitzustellen, die wirtschaftlich verwendet werden können. Eine weitere Aufgabe dieser Erfindung ist, eine Biozidzusammensetzung bereitzustellen, welche keine zu großen Mengen an freiem Formaldehyd bereit stellt. Ein Verfahren zum Kontrollieren des Wachstums mindestens eines Mikroorganismus in Metallbearbeitungsflüssigkeiten ist ebenfalls Aufgabe dieser Erfindung.

Gelöst wird diese Aufgabe durch eine Biozidzusammensetzung enthaltend als mikrobiozide Wirkkomponenten:

(a) Hexahydro-1,3,5-tris(2-hydroxyethyl)-s-triazin und

(b) Tetramethylolacetylendiharnstoff.

gemäß Hauptanspruch.

Die Biozidzusammensetzung zeichnet sich dadurch aus, dass die in dieser enthaltenen mikrobioziden Wirkkomponenten (a) und (b) synergistisch zusammenwirken, und deshalb beim gleichzeitigen Einsatz in geringeren Konzentrationen verwendet werden können, verglichen mit den Konzentrationen im Falle der Einzelkomponenten. Die mikrobioziden Wirkkomponenten sind in der Zusammensetzung in einer wirksamen Menge vorhanden, so dass das Wachstum mindestens eines Mikroorganismus mit Hilfe der erfindungsgemäßen Biozidzusammensetzung kontrolliert werden kann.

Die erfindungsgemäßen mikrobioziden Wirkkomponenten sind bekannte Verbindungen bzw. Biozide und sind als solche im Handel erhältlich oder nach bekannten Methoden herzustellen. Hexahydro-1,3,5-tris(2-hydroxyethyl)-s-triazin (CAS-Nr. 4719-04-4) ist beispielsweise unter dem Handelsnamen EMULCID von der THOR GmbH erhältlich; Tetramethylolacetylendiharnstoff (CAS-Nr. 5395-50-6) wird unter dem Handelsnamen ACTICIDE™ F(N) ebenfalls von der THOR GmbH vertrieben.

Gemäß einer allgemeinen Ausführungsform der Erfindung enthält die erfindungsgemäße Biozidzusammensetzung das Hexahydro-1,3,5-tris(2-hydroxyethyl)-s-triazin und den Tetramethylolacetylendiharnstoff in einem Gewichtsverhältnis von 5 : 1 bis 1 : 120, bevorzugt im Gewichtsverhältnis von 1 : 1 bis 1 : 32, besonders bevorzugt im Gewichtsverhältnis von 1 : 1 bis 1 : 10, insbesondere bevorzugt im Bereich von 1: 1 bis 1: 3.

Es ist vorteilhaft, wenn die erfindungsgemäße Biozidzusammensetzung das Hexahydro-1,3,5-tris(2-hydroxyethyl)-s-triazin sowie die weitere mikrobizide Wirkkomponente, den Tetramethylolacetylendiharnstoff in einer Gesamtkonzentration von 20 bis 80 Gew.-%, bevorzugt von 55 bis 75 Gew.-%, besonders bevorzugt von 60 bis 70 Gew.-%, bezogen auf die gesamte Biozidzusammensetzung, enthält. Gemäß einer bevorzugten Ausführungsform der Erfindung enthält die erfindungsgemäße Biozidzusammensetzung das Hexahydro-1,3,5-tris(2-hydroxyethyl)-s-triazin in einer Konzentration von (a) im Bereich von 10 bis 30 Gew.-%, bevorzugt im Bereich von 15 bis 30 Gew.-% und den Tetramethylolacetylendiharnstoff in einer Konzentration von (b) im Bereich von 10 bis 65 Gew.-%, bevorzugt im Bereich von 40 bis 60 Gew.-%, jeweils bezogen auf die gesamte Biozidzusammensetzung.

Die erfindungsgemäße Biozidzusammensetzung enthält ferner ein oder mehrere Lösungsmittel ausgewählt aus der Gruppe Wasser, Ethylenglykol, Diethylenglykol, 1,2-Propylenglykol, Dipropylenglykol, Tripropylenglykol, Butylglykol, Butyldiglykol, Butyldiglykolacetat, 2,2,4-Trimethylpenthandiolmonoisobutyrat, Polyethylenglykol und Propylenglykol, oder Mischungen dieser. Bevorzugt enthält die Biozidzusammensetzung als Lösungsmittel Wasser. Der Anteil des Lösungsmittels liegt allgemein im Bereich von 80 bis 20 Gew.-%, bevorzugt im Bereich von 25 bis 45 Gew.-%, besonders bevorzugt im Bereich von 30 bis 40 Gew.-%, bezogen auf die gesamte Biozidzusammensetzung.

Die erfindungsgemäße Biozidzusammensetzung enthält gemäß einer bevorzugten Ausführungsform ferner Stoffe zur Einstellung des pH-Werts. Bei diesen Stoffen handelt es sich bevorzugt um Alkalimetallhydroxid(e). Die Verwendung von Magnesium oder Calciumhydroxid ist weniger bevorzugt, da möglicherweise schwerlösliche Salze gebildet werden könnten. Dementsprechend ist der Einsatz von Kalium- und/oder Natriumhydroxid im Sinne der Erfindung besonders bevorzugt. Gemäß einer weiteren Ausführungsform der Erfindung handelt es sich bei dem Stoff zur Einstellung des pH-Wertes um ein Amin, bevorzugt um Monoethanolamin und/oder Triethanolamin.

Gemäß einer bevorzugten Ausführungsform hat die Biozidzusammensetzung einen pH-Wert im Bereich von 9 bis 12, bevorzugt im Bereich von 10 bis 11,5. Im Rahmen der Erfindung stellte sich heraus, dass Biozidzusammensetzungen, die einen pH-Wert im Bereich von 10 bis 11,5 aufweisen, sehr lagerstabil sind, und kaum zu Verfärbungen neigen.

Überraschend wird ferner durch den gemeinsamen Einsatz von Hexahydro-1,3,5-tris(2-hydroxyethyl)-s-triazin und Tetramethylolacetylendiharnstoff als biozide / antimikrobielle Wirkstoffe eine Biozidzusammensetzung erhalten, die keine verschlechterten Korrosionseigenschaften im Vergleich zu Hexahydro-1,3,5-tris(2-hydroxyethyl)-s-triazin aufweist. Es wird somit eine - in Bezug auf Korrosion - alternative Zusammensetzung zur Verfügung gestellt, deren Wirkkomponenten synergistisch zusammenwirken, und die darüber hinaus in der Endanwendung (wassergemischten Metallbearbeitungsflüssigkeit) einen deutlich geringeren Anteil an freiem Formaldehyd aufweist, verglichen mit Hexahydro-1,3,5-tris(2-hydroxyethyl)-s-triazin. Dies ist daher überraschend, da Tetramethylolacetylendiharnstoff als korrosiv bekannt ist.

Die Erfindung betrifft gemäß einer bevorzugten Ausführungsform eine Biozidzusammensetzung enthaltend:

    (a) 16 bis 22 Gew.-% Hexahydro-1,3,5-tris(2-hydroxyethyl)-s-triazin,
    (b) 46 bis 52 Gew.-% Tetramethylolacetylendiharnstoff,
    (c) 0,1 bis 0,3 Gew.-% KOH und/oder NaOH, und
    (d) ad 100 Gew.-% Wasser.

Der pH-Wert dieser besonders bevorzugten Biozidzusammensetzung liegt im Bereich von 9,5 bis 11,5. Gemäß einer besonders bevorzugten Ausführungsform der Erfindung besteht die Biozidzusammensetzung aus den vorgenannten Bestandteilen (a), (b), (c) und (d) und hat einen pH-Wert im Bereich von 10 bis 11,5.

Eine Zusammensetzung enthaltend ausschließlich das Hexahydro-1,3,5-tris(2-hydroxyethyl)-s-triazin und den Tetramethylolacetylendiharnstoff in den angegebenen Gewichtsverhältnissen, ohne Vorliegen einer weiteren mikrobiziden Wirkkomponente wird nachstehend als "erfindungsgemäße Biozidzusammensetzung" bezeichnet werden. Eine "erfindungsgemäße Biozidzusammensetzung" kann neben dem Hexahydro-1,3,5-tris(2-hydroxyethyl)-s-triazin und dem Tetramethylolacetylendiharnstoff in den angegebenen Gewichtsverhältnissen ein oder mehrere weitere Bestandteile aufweisen. Der oder die weiteren Bestandteile können dabei eine mikrobizide Wirkung aufweisen, oder sie können keine mikrobizide Wirkung aufweisen, also etwa ein Lösungsmittel, Dispergiermittel oder Suspensionsmittel sein.

In einer weiteren Ausführungsform besteht die erfindungsgemäße Biozidzusammensetzung überwiegend aus dem Hexahydro-1,3,5-tris(2-hydroxyethyl)-s-triazin und dem Tetramethylolacetylendiharnstoff in den oben angegebenen Mischungsverhältnissen (also der erfindungsgemäßen Biozidzusammensetzung). Dies bedeutet, dass die erfindungsgemäße Zusammensetzung als Hauptbestandteil das erfindungsgemäße Biozidgemisch, vorzugsweise in einer Menge von gleich oder größer 50 Gew.-% Gemisch, mehr bevorzugt in einer Menge von gleich oder größer 70 Gew.-%, insbesondere in einer Menge von gleich oder größer 90 Gew.-%, insbesondere in einer Menge von gleich oder größer 95 Gew.-% Gemisch, bezogen auf die Gesamtmasse an biozidem Wirkstoff, enthält. Daneben kann mindestens ein weiteres Biozid vorhanden sein, ebenso wie ein oder mehrere Lösungsmittel, Dispergiermittel oder Suspensionsmittel.

In einer weiteren Ausführungsform der Erfindung besteht die erfindungsgemäße Biozidzusammensetzung im Wesentlichen aus den erfindungsgemäßen mikrobiziden Wirkkomponenten, d.h., dass neben diesen wohl noch ein oder auch mehrere andere Biozide enthalten sein können, diese aber in einer solchen Menge vorliegen, in der kein Beitrag des jeweiligen von den Komponenten der erfindungsgemäßen mikrobiziden Wirkkomponenten verschiedenen Biozids zum Gesamteffekt der entstehenden Mischung vorliegt. Wenn also die biozide Wirkung einer erfindungsgemäßen Biozidzusammensetzung, die - neben den Komponenten des erfindungsgemäßen Biozidgemischs als wesentlichen Bestandteil - noch ein oder mehrere weitere Biozide in untergeordneter bzw. geringfügiger Konzentration aufweist, nicht verändert ist gegenüber dem Einsatz des erfindungsgemäßen Biozidgemischs, wird dieses im Zusammenhang mit der vorliegenden Erfindung als "im Wesentlichen bestehend" bezeichnet. Es können ein oder mehrere weitere Bestandteile ohne eine biozide Wirkung vorhanden sein, etwa Lösungsmittel.

In einer weiteren Ausführungsform kann die erfindungsgemäße Biozidzusammensetzung aus den Komponenten des erfindungsgemäßen Biozidgemischs als einzigen bioziden Wirkstoffen bestehen, also einem Wirkstoffgehalt von 100% des Hexahydro-1,3,5-tris(2-hydroxyethyl)-s-triazins und des Tetramethylolacetylendiharnstoffs in den angegebenen Gewichtsverhältnissen. In einem solchen Fall ist es lediglich möglich, dass ein oder mehrere weitere Bestandteile ohne eine biozide Wirkung vorhanden sind, etwa Lösungsmittel.

In einer Ausführungsform liegt die Biozidzusammensetzung in Form einer flüssigen Zubereitung vor, beispielsweise als Lösung, Suspension oder Dispersion in einem flüssigen Medium. Selbstverständlich kann die erfindungsgemäße Biozidzusammensetzung jedoch auch direkt in dem zu konservierenden Produkt gemischt werden. Es ist ebenfalls möglich, die erfindungsgemäße Biozidzusammensetzung durch den Zusatz weiterer Wirkstoffe speziellen Anwendungsgebieten anzupassen, beispielsweise im Sinne einer erhöhten Wirkung oder einer verbesserten Verträglichkeit mit den vor den Mikroorganismen zu schützenden Stoffen. Diese weiteren Stoffe sind dem Fachmann auf dem Gebiet der Biozide bekannt und können von diesem in Abhängigkeit der Anwendung der erfindungsgemäßen Biozidzusammensetzung ausgewählt werden.

Gemäß einer Ausführungsform der Erfindung enthält die erfindungsgemäße Biozidzusammensetzung ein oder mehrere Komplexbildner. Insbesondere geeignete Komplexbildner umfassen Methylglycindiessigsäure (MGDA), Ethylendiamintetraessigsäure (EDTA), Nitrilotriessigsäure (NTA), Tripolyphosphat (TPP), Citrate, Phosphonate, Kronenether, Polyamine, insbesondere Diamine und Triamine, Natriumthiosulfat, Ammoniumthiosulfat und Natriumsulfit. Besonders bevorzugte Komplexbildner sind EDTA, NTA und MGDA. Es hat sich gezeigt, dass die Verwendung von einem oder mehreren Komplexbildnern zu antimikrobiell wirksameren Zusammensetzungen führt.

Gemäß einer weiteren Ausführungsform der Erfindung enthält die erfindungsgemäße Biozidzusammensetzung weiterhin ein oder mehrere mikrobiozide Wirkkomponenten ausgewählt aus der Gruppe bestehend aus Natriumpyrithion, 2-n-Octylisothiazolin-3-on, 3-Iod-2-propinyl-N-butylcarbamat, N-Alkyl-1,2-benzisothiazolin-3-on, 2-Methylisothiazolin-3-on und 5-Chlor-2-methylisothiazolin-3-on. N-Alkyl-1,2-benzisothiazolin-3-one sind solche mit $C_{1-5}$-Alkyl. Beispiele dieser Verbindungen schließen N-n-Butyl-, N-Methyl-, N-Ethyl-, N-n-Propyl-, N-Isopropyl-, N-n-Pentyl-, N-Cyclopentyl-, N-Isobutyl- und N-tert.-Butyl-1,2-benzisothiazolin-3-on ein. Besonders bevorzugt ist das N-Alkyl-1,2-benzisothiazolin-3-on das N-Methyl-1,2-benzisothiazolin-3-on oder das N-n-Butyl-1,2-Benzisothiazolin-3-on. Gemäß einer besonders bevorzugten Ausführungsform enthält die erfindungsgemäße Biozidzusammensetzung als weitere mikrobiozide Wirkkomponenten Natriumpyrithion, oder Methylisothiazolin-3-on und 5-Chlor-2-methylisothiazolin-3-on, oder Chlor-2-methylisothiazolin-3-on, oder N-Methyl-1,2-benzisothiazolin-3-on und/oder das N-n-Butyl-1,2-Benzisothiazolin-3-on, oder 2-n-Octylisothiazolin-3-on, oder 3-Iod-2-propinyl-N-butylcarbamat.

Die erfindungsgemäße Biozidzusammensetzung kann daneben noch andere Bestandteile enthalten, die geeignet sind, den in der Zusammensetzung vorhandenen freien Formaldehyd zu reduzieren. Als solche Bestandteile werden Amine, Amide oder Alkohole verwendet. Als Amine kommen z.B. Alkanolamine, wie Monoethanolamin in Frage oder auch Aminosäure wie z.B. Glycin. Als Amide kommen beispielsweise Harnstoffderivate wie Harnstoff, Acetylendihamstoff, Hydantoine in Frage. Als Alkohole bevorzugt Glykole, oder Benzylalkohol.

Bei der praktischen Anwendung kann die Biozidzusammensetzung entweder als fertiges Gemisch, oder durch getrennte Zugabe der mikrobioziden Wirkkomponenten der Zusammensetzung in den zu konservierenden Stoff bzw. in den zu konservierenden Ort, beispielsweise eine Metallbearbeitungsflüssigkeit eingebracht werden. Die erfindungsgemäße Biozidzusammensetzung kann beispielsweise hergestellt werden, indem die Bestandteile unter Rühren in jeder Reihenfolge bei einer Temperatur von 25 +/- 20°C gemischt werden.

Nach der DIN 51385 wird zwischen wassermischbaren und wassergemischten Metallbearbeitungsflüssigkeiten bzw. Kühlschmierstoffen unterschieden. Unter dem Begriff "wassergemischt" ist der Endzustand des fertigen Mediums, meist in Form einer Öl-In-Wasser-Emulsion, und unter "wassermischbar" das Konzentrat der Metallbearbeitungsflüssigkeit bzw. des Kühlschmierstoffes verstanden. Wassergemischte Kühlschmierstoffe werden beim Verwender durch Mischen des Konzentrats mit Wasser hergestellt.

Die Erfindung betrifft somit auch eine wassermischbare Metallbearbeitungsflüssigkeit, welche die vorstehend charakterisierte Biozidzusammensetzung enthält. Diese wassermischbare Metallverarbeitungsflüssigkeit enthält allgemein 1 bis 10 Gew.-%, bevorzugt 3 bis 5 Gew.-% der Wirkstoffe (Hexahydro-1,3,5-tris(2-hydroxyethyl)-s-triazin und Tetramethylolacetylendihamstoff) der erfindungsgemäßen Biozidzusammensetzung, bezogen auf die Gesamtmenge der wassermischbaren Metallbearbeitungsflüssigkeit. Die weiteren Bestandteile der wassermischbaren Metallbear-tungsflüssigkeit sind dem Fachmann bekannt. Bei diesen handelt es sich üblicherweise um natürliche und/oder synthetische Mineralöle, Glykole, Emulgatoren, Mittel zum Einstellen und Puffern des pH-Wertes, Korrosionsschutzadditive, Lösungsvermittler und andere übliche Additive.

Die Erfindung betrifft somit eine konzentrierte Metallbearbeitungsflüssigkeit, enthaltend:

(a) Hexahydro-1,3,5-tris(2-hydroxyethyl)-s-triazin und

(b) Tetramethylolacetylendiharnstoff,

wobei (a) und (b) in einer solchen synergistisch wirksamen Menge vorhanden sind, dass das Wachstum mindestens eines Mikroorganismus kontrolliert werden kann, wenn die konzentrierte Metallbearbeitungsflüssigkeit verdünnt und an der Metallbearbeitungsstelle verwendet wird.

Die Erfindung betrifft ferner eine wassergemischte Metallbearbeitungsflüssigkeit, die eine wie vorstehend charakterisierte Biozidzusammensetzung enthält. Metallbearbeitungsflüssigkeit bedeutet im Rahmen der vorliegenden Erfindung die bereits eingangs definierten Flüssigkeiten, die zum Zweck der Metallbearbeitung eingesetzt werden. Diese Flüssigkeiten sind dem Fachmann beispielsweise auch als Kühlschmiermittel, Kühlschmierstoffe, oder Bohr- und Schneidöle bekannt. Die Metallbearbeitungsflüssigkeit enthält allgemein 0,01 bis 1 Gew.-%, bevorzugt 0,03 bis 0,3 Gew.-% der Wirkstoffe (Hexahydro-1,3,5-tris(2-hydroxyethyl)-s-triazin und Tetramethylolacetylendiharnstoff) der erfindungsgemäßen Biozidzusammensetzung, bezogen auf die Gesamtmenge der wassergemischten Metallbearbeitungsflüssigkeit. Die Erfindung betrifft somit auch eine wassergemischte Metallbearbeitungsflüssigkeit enthaltend 0,01 bis 1 Gew.-%, bevorzugt 0,03 bis 0,3 Gew.-% der Wirkstoffe der erfindungsgemäßen Biozidzusammensetzung, in dem vorstehend definierten Verhältnis, bezogen auf die Gesamtmenge der wassergemischten Metallbearbeitungsflüssigkeit.

Die Erfindung betrifft ferner ein Verfahren zum Kontrollieren des Wachstums mindestens eines Mikroorganismus in einer wässrigen Flüssigkeit, umfassend den Schritt des Zugebens von

(a) Hexahydro-1,3,5-tris(2-hydroxyethyl)-s-triazin und

(b) Tetramethylolacetylendiharnstoff,

zu einer wässrigen Flüssigkeit, so dass das Wachstum des Mikroorganismus in der Flüssigkeit inhibiert ist. Gemäß einer Ausführungsform der Erfindung ist die wässrige Flüssigkeit eine Metallbearbeitungsflüssigkeit wie ein Kühlschmiermittel, ein Kühlschmierstoff, oder ein Bohröl, oder ein Schneidöl.

**Die nachfolgenden Beispiele veranschaulichen die Erfindung:**

Untersuchung der synergistischen Wirkung von HHT und TMAD

Es wurde der Synergismus einer Kombination von Hexahydro-1,3,5-tris(2-hydroxyethyl)-2-triazin (HHT) und Tetramethylolacetylendiharnstoff (TMAD) getestet. Als Testorganismus wurde das Bakterium *Pseudomonas aeruginosa* (DSM 50071) verwendet. Dazu wurden wässrige Gemische mit unterschiedlichen Konzentrationen der jeweiligen mikrobiziden Wirkkomponenten hergestellt und bezüglich ihrer Wirkung auf *Pseudomonas aeruginosa* überprüft. Die Überprüfung erfolgte in Ringer-Lösung (pH 6.8) mit einer Zelldichte von $10^6$ Keimen pro ml.

Die Inkubationszeit betrug 24 Stunden bei 25 °C. Jede Probe wurde bei 120 U/min auf einem Inkubationsschüttler bebrütet. Nach 24 Stunden wurde 1 ml des jeweiligen Ansatzes auf Nähragarplatten (Nutrient Agar) ausplattiert, für 48 h bei 30°C inkubiert und anschließend die Zellzahl bestimmt (KBE/ml). Eine Keimzahl (KBE/ml) kleiner $10^3$ wurde als Hemmung gewertet. Auf diese Weise wurden die minimalen Hemmkonzentrationen (MHK) der beiden Wirkstoffe einzeln und in Kombination bestimmt.

Der auftretende Synergismus wurde durch Berechnen des Synergieindex (SI) zahlenmäßig dargestellt. Die Berechnung erfolgte nach der gängigen Methode von F.C. Kull et al., Applied Microbiology, Bd. 9 (1961), S. 538. Dort wird der SI nach der folgenden Formel berechnet:

$$\text{Synergieindex SI} = Q_a/Q_A + Q_b/Q_B$$

$Q_a$ = Konzentration von Komponente A in der Mischung A + B
$Q_A$ = Konzentration von Komponente A als alleinigem Biozid
$Q_b$ = Konzentration von Komponente B in der Mischung A + B
$Q_B$ = Konzentration von Komponente B als alleinigem Biozid

Wenn der Synergieindex einen Wert von über 1 aufweist, bedeutet dies, dass ein Antagonismus vorliegt. Wenn der Synergieindex den Wert 1 annimmt, bedeutet dies, dass eine Addition der Wirkung der beiden Biozide gegeben ist. Wenn der Synergieindex einen Wert von unter 1 annimmt, bedeutet dies, dass ein Synergismus der beiden Biozide besteht.

Tabelle 1 HHT und TMAD

Bestimmung des Synergieindexes von HHT und TMAD bezüglich *Pseudomonas aeruginosa* (DSM 50071) bei einer Inkubationszeit von 24 Stunden bei 25 °C.

Tabelle 1: Synergieindices TMAD + HHT

| MHKQa (TMAD) [ppm] | MHK Qb (HHT) [ppm] | Total [ppm] | Qa/QA | Qb/QB | Synergieindex |
|---|---|---|---|---|---|
| 412,50 | 0,00 | 412,50 | 1,00 | 0,00 | 1,00 |
| 294,64 | 2,42 | 297,06 | 0,71 | 0,05 | 0,76 |
| 235,71 | 7,26 | 242,97 | 0,57 | 0,15 | 0,72 |
| 176,79 | 9,68 | 186,46 | 0,43 | 0,20 | 0,63 |
| 117,86 | 12,10 | 129,95 | 0,29 | 0,25 | 0,54 |
| 58,93 | 18,15 | 77,07 | 0,14 | 0,38 | 0,52 |
| 29,46 | 24,19 | 53,66 | 0,07 | 0,50 | 0,57 |
| 0,00 | 48,39 | 48,39 | 0,00 | 1,00 | 1,00 |
| $Q_a$ = TMAD (Zusammensetzung aus TMAD und HHT), die einen Endpunkt zeigt | | | | | |
| $Q_A$ = TMAD-Konzentration (TMAD allein), die einen Endpunkt zeigt | | | | | |
| $Q_b$ = HHT-Konzentration (Zusammensetzung HHT und TMAD), die einen Endpunkt zeigt | | | | | |
| $Q_B$ = HHT-Konzentration (HHT allein), die einen Endpunkt zeigt | | | | | |

Aus der Tabelle 1 ist ersichtlich, dass bei einem Verhältnis der mikrobiziden Wirkkomponenten HHT und TMAD in einem Gewichtsverhältnis von 1 : (1 bis 120) ein Synergismus vorliegt. Der Wirkstoffe der erfindungsgemäßen Biozidzusammensetzung wirken dabei in einem Verhältnis von HHT zu TMAD von 1 : 1, 1 : 3,2, 1 : 9,7, 1 : 18, 1 : 32 bzw. 1 : 121 synergistisch zusammen.

**Patentansprüche**

1. Biozidzusammensetzung enthaltend als mikrobiozide Wirkkomponenten:

   (a) Hexahydro-1,3,5-tris(2-hydroxyethyl)-s-triazin und
   (b) Tetramethylolacetylendiharnstoff,

   **dadurch gekennzeichnet, dass** das Hexahydro-1,3,5-tris(2-hydroxyethyl)-s-triazin und der Tetramethylolacetylendiharnnstoff im Gewichtsverhältnis von 5 : 1 bis 1 : 120 vorliegen.

2. Biozidzusammensetzung nach Anspruch 1, **dadurch gekennzeichnet, dass** das Hexahydro-1,3,5-tris(2-hydroxyethyl)-s-triazin und der Tetramethylolacetylendiharnstoff im Gewichtsverhältnis von 1 : (1 bis 3) vorliegen.

3. Biozidzusammensetzung nach Anspruch 1 oder 2, **dadurch gekennzeichnet, dass** die Konzentration von (a) und (b) im Bereich 20 bis 80 Gew.-% liegt.

4. Biozidzusammensetzung nach einem der Ansprüche 1 bis 3, **dadurch gekennzeichnet, dass** diese einen pH-Wert im Bereich von 9 bis 12 aufweist.

5. Biozidzusammensetzung nach einem der Ansprüche 1 bis 4, **dadurch gekennzeichnet, dass** sie zusätzlich zu den mikrobiozide Wirkkomponenten (a) und (b) ein oder mehrere mikrobiozide Wirkkomponenten ausgewählt aus der Gruppe bestehend aus Natriumpyrithion, 2-n-Octylisothiazolin-3-on, 3-Iod-2-propinyl-N-butylcarbamat, N-Alkyl-1,2-benzisothiazolin-3-on, 2-Methylisothiazolin-3-on und 5-Chlor-2-methylisothiazolin-3-on enthält.

6. Metallbearbeitungsflüssigkeit, enthaltend eine Zusammensetzung nach einem der Ansprüche 1 bis 5.

7. Konzentrierte Metallbearbeitungsflüssigkeit, enthaltend:

   (a) Hexahydro-1,3,5-tris(2-hydroxyethyl)-s-triazin und
   (b) Tetramethylolacetylendiharnstoff,

   in einem Gewichtsverhältnis von (a) zu (b) von 5 : 1 bis 1 : 120, und wobei (a) und (b) in einer solchen synergistisch wirksamen Menge vorhanden sind, dass das Wachstum mindestens eines Mikroorganismus kontrolliert werden kann, wenn die konzentrierte Metallbearbeitungsflüssigkeit verdünnt und an der Metallbearbeitungsstelle verwendet wird.

8. Verfahren zum Kontrollieren des Wachstums mindestens eines Mikroorganismus in einer wässrigen Flüssigkeit, umfassend den Schritt des Zugebens von

   (a) Hexahydro-1,3,5-tris(2-hydroxyethyl)-s-triazin und
   (b) Tetramethylolacetylendiharnstoff,

   in einem Gewichtsverhältnis von (a) zu (b) von 5 : 1 bis 1 : 120, zu der wässrigen Flüssigkeit, so dass das Wachstum des Mikroorganismus in der Flüssigkeit inhibiert ist.

9. Verfahren nach Anspruch 8, **dadurch gekennzeichnet, dass** die wässrige Flüssigkeit eine Metallbearbeitungsflüssigkeit ist.

**Claims**

1. Biocidal composition containing as active microbicidal components:

(a) Hexahydro-1,3,5-tris (2-hydroxyethyl) -s-triazine and
(b) Tetramethylolacetylenediurea,

**characterized in that** the hexahydro-1,3,5-tris (2-hydroxyethyl) -s-triazine and the Tetramethylolacetylenediurea are present in a weight ratio from 5 : 1 to 1 : 120.

2. Biocidal composition according to claim 1, **characterized in that** the hexahydro-1,3,5-tris (2-hydroxyethyl) -s-triazine and Tetramethylolacetylenediurea are present in a weight ratio of 1: (1 to 3).

3. Biocidal composition according to claim 1 or 2, **characterized in that** the concentration of (a) and (b) is in the range 20 to 80 % by weight.

4. Biocidal composition according to one of claims 1 to 3, **characterized in that** it has a pH in the range of 9 to 12.

5. Biocidal composition according to one of claims 1 to 4, **characterized in that** it in addition to the microbicidal active components (a) and (b) comprises one or more microbicidal active components selected from the group consisting of sodium pyrithione, 2-n-octylisothiazolin-3-one, iodo-2-propynyl-N-butylcarbamate, N-alkyl-1,2-benzisothiazolin-3-one, 2-methylisothiazolin-3-one and 5-chloro-2-methylisothiazolin-3-one.

6. Metal working fluid containing a composition according to any one of claims 1 to 5.

7. Concentrated metalworking fluid comprising:

(a) Hexahydro-1,3,5-tris (2-hydroxyethyl) -s-triazine and
(b) Tetramethylolacetylenediurea,

in a weight ratio of (a) to (b) from 5 : 1 to 1 : 120, and wherein (a) and (b) are present in such a synergistically effective amount, that the growth of at least one microorganism can be controlled when the concentrated metalworking fluid is diluted and used in the metalworking site.

8. A method for controlling the growth of at least one microorganism in an aqueous fluid comprising the step of adding

(a) Hexahydro-1,3,5-tris (2-hydroxyethyl) -s-triazine and
(b) Tetramethylolacetylenediurea,

in a weight ratio of (a) to (b) from 5 : 1 to 1 : 120 to the aqueous fluid, so that the growth of the microorganism is inhibited in the fluid.

9. A method according to claim 8, **characterized in that** the aqueous fluid is a metalworking fluid.

**Revendications**

1. Composition de biocide, contenant comme composants actifs microbicides :

(a) de l'hexahydro-1,3,5-tris(2-hydroxyéthyl)-s-triazine et
(b) de la tétraméthylolacétylènediurée,

**caractérisée en ce que** l'hexahydro-1,3,5-tris(2-hydroxyéthyl)-s-triazine et la tétraméthylolacétylènediurée sont présentes en un rapport pondéral de 5 : 1 à 1 : 120.

2. Composition de biocide selon la revendication 1, **caractérisée en ce que** l'hexahydro-1,3,5-tris(2-hydroxyéthyl)-s-triazine et la tétraméthylolacétylènediurée sont présentes en un rapport pondéral de 1 : (1 à 3).

3. Composition de biocide selon la revendication 1 ou 2, **caractérisée en ce que** la concentration de (a) et (b) se situe dans la plage de 20 à 80 % en poids.

4. Composition de biocide selon l'une quelconque des revendications 1 à 3, **caractérisée en ce que** celle-ci présente un pH de 9 à 12.

5. Composition de biocide selon l'une quelconque des revendications 1 à 4, **caractérisée en ce qu'**en plus des composants actifs microbicides (a) et (b) elle contient un ou plusieurs composants actifs microbicides choisis dans le groupe constitué par la pyrithione de sodium, la 2-n-octylisothiazolin-3-one, le carbamate de 3-iodo-2-propynyl-N-butyle, une N-alkyl-1,2-benzisothiazolin-3-one, la 2-méthylisothiazolin-3-one et la 5-chloro-2-méthylisothiazolin-3-one.

6. Liquide pour l'usinage de métaux, contenant une composition selon l'une quelconque des revendications 1 à 5.

7. Liquide concentré pour l'usinage de métaux, contenant :

   (a) de l'hexahydro-1,3,5-tris-(2-hydroxyéthyl)-s-triazine et
   (b) de la tétraméthylolacétylènediurée,

en un rapport pondéral de (a) à (b) de 5 : 1 à 1 : 120, et (a) et (b) étant présents en une quantité à effet synergique telle que la croissance d'au moins un micro-organisme peut être maîtrisée lorsqu'on dilue le liquide concentré pour l'usinage de métaux et on l'utilise au poste d'usinage de métaux.

8. Procédé pour la maîtrise de la croissance d'au moins un micro-organisme dans un liquide aqueux, comprenant l'étape de l'addition de

   (a) hexahydro-1,3,5-tris(2-hydroxyéthyl)-s-triazine et
   (b) tétraméthylolacétylènediurée,

en un rapport pondéral de (a) à (b) de 5 : 1 à 1 : 120, au liquide aqueux, de sorte que la croissance du micro-organisme dans le liquide est inhibée.

9. Procédé selon la revendication 8, **caractérisé en ce que** le liquide aqueux est un liquide pour l'usinage de métaux.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1402778 A1

- EP 1579763 A2

**In der Beschreibung aufgeführte Nicht-Patentliteratur**

- Disinfection, Sterilization and Preservation. Lippincott, Williams & Wilkins, 2001

- **VON F.C. KULL et al.** *Applied Microbiology,* 1961, vol. 9, 538